(19) Europäisches Patentamt
European Patent Office
Office européen des brevets

(11) **EP 1 948 545 B1**

(12) **EUROPÄISCHE PATENTSCHRIFT**

(45) Veröffentlichungstag und Bekanntmachung des Hinweises auf die Patenterteilung:
**07.03.2012 Patentblatt 2012/10**

(21) Anmeldenummer: **06807046.5**

(22) Anmeldetag: **06.10.2006**

(51) Int Cl.:
**B65H 35/06** *(2006.01)*    **B65H 35/00** *(2006.01)*

(86) Internationale Anmeldenummer:
**PCT/EP2006/067145**

(87) Internationale Veröffentlichungsnummer:
**WO 2007/048695 (03.05.2007 Gazette 2007/18)**

(54) **SPALTFREUDIGES KLEBEBAND, SEINE VERWENDUNG UND VERWENDUNG EINES WERKZEUGES ZU SEINER HERSTELLUNG**

EASILY SPLIT ADHESIVE TAPE, ITS USE AND USE OF A DEVICE FOR ITS PRODUCTION

RUBAN ADHESIF REFENDABLE, SON UTILISATION ET UTILISATION D'UN OUTIL POUR SA FABRICATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.10.2005 DE 102005051181**

(43) Veröffentlichungstag der Anmeldung:
**30.07.2008 Patentblatt 2008/31**

(73) Patentinhaber: **TESA SE**
**20253 Hamburg (DE)**

(72) Erfinder:
• **GÖTZ, Kerstin**
**22547 Hamburg (DE)**
• **KLEINHOFF, Klaus**
**31552 Rodenberg (DE)**

(56) Entgegenhaltungen:
**WO-A-02/44062     WO-A1-03/029119**
**DE-A1- 1 945 504     DE-U1- 9 215 731**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung bezieht sich auf ein Klebeband mit einer Längserstreckung, welches dahingehend optimiert ist, dass es nach seiner Verklebung gut solche Kräfte überträgt, die innerhalb der Klebebandebene im wesentlichen quer zu seiner Längserstreckung gerichtet sind, während gegenüber Kräften in der Dickenrichtung des Klebebandes genau im Gegenteil schon ein Versagen bei möglichst niedrigen Kraftbeträgen angestrebt ist.

Die besondere Schwierigkeit dieser Aufgabenstellung liegt also in der Gegensätzlichkeit der beiden Festigkeitsforderungen. Während es dem Fachmann schon lange geläufig ist, schwache Klebebänder herzustellen und auch geläufig ist, starke Klebebänder herzustellen, so ist es ihm lange Zeit fremd gewesen, ein Klebeband herzustellen, dass sowohl stark als auch schwach ist.

Diese gegensätzliche Forderung gibt es aber an den Klebebändern, die einen sogenannten Rollenverschluss bewirken sollen bei der Durchführung eines sogenannten fliegenden Spleißes.

Fliegende Spleiße werden in der Herstellung, Veredlung und Verarbeitung von dünnen bahnförmigen Materialien - insbesondere Papier - ausgeführt. Das Adjektiv "fliegend" bringt dabei zum Ausdruck, dass dieser Spleiß - also eine Verbindung - bei voller-Betriebsgeschwindigkeit der jeweiligen Fertigungsanlage durchgeführt wird. Die Papierbahngeschwindigkeit in Papier herstellenden Maschinen beträgt heutzutage typischerweise über 100 km/h, wobei die schnellsten gar 130 km/h ermöglichen.

Spleiße werden in der Papierveredlung und -verarbeitung dadurch erforderlich, dass selbst bei den heute üblichen riesigen Dimensionen von Papierrollen (bis zu 9 Meter breit und 2,5 Meter Durchmesser) auch diese irgendwann zur Neige gehen. Also muss eine abgespulte Rolle durch eine neue ersetzt werden. - In der Papierherstellung ergibt sich das analoge Bedürfnis dadurch, dass auch die größte Rolle irgendwann voll ist.

Zur Verdeutlichung, warum in vielen Anwendungsfeldern von den Spleißen gefordert wird, dass sie fliegend ausführbar sind, werde nachfolgend beispielhaft das Veredeln einer Papierbahn durch Beschichten herausgegriffen. Die erreichte Schichtdicke hängt nicht nur von dem Abstand zwischen der Rohpapieroberseite und der Unterkante des Rakels ab, sondern auch von der Geschwindigkeit, mit der die Papierbahn durch den Beschichtungsspalt hindurchgezogen wird: Ein schnelleres Hindurchziehen führt zu einer geringeren Schichtdicke. Aber auch diese Schichtdickenabnahme ist nicht nur eine Funktion der Bahngeschwindigkeit sondern auch der Benetzungswilligkeit der Papierbahn und der Viskosität der Beschichtungsmasse. Die Viskosität ist wiederum eine Funktion der Temperatur und diese wird wieder durch die Bahngeschwindigkeit beeinflusst. Kurzum: Eine konstante Beschichtungsqualität lässt sich nur erreichen bei Konstanthaltung der wesentlichen Einflussparameter, darunter insbesondere der Bahngeschwindigkeit. Wenn man aber die Bahn nicht abbremsen darf zur Durchführung eines Spleißes, dann muss man eben den Spleiß bei voller Bahngeschwindigkeit durchführen.

Analog dem zuvor behandelten vollflächigen Beschichten ist auch bei einem nur teilflächenartigen Beschichten eine Konstanthaltung aller wesentlichen Einflussparameter erstrebt. Der gewerblich wichtigste Fall eines teilflächigen Beschichtens ist das Bedrucken, seien es nun Tapeten, Bücher oder Zeitschriften. Innerhalb der verschiedenen Druckverfahren erweist sich für die Spleißausführung das Tiefdrucken als besonders anspruchsvoll, weil es meistens auf Hochglanzpapier ausgeführt wird, welches in den typischerweise für Illustrierte benötigten großen Mengen wirtschaftlich nur dadurch zur Verfügung gestellt werden kann, dass es solche Bestandteile enthält, die das Papier "spröde" werden lassen, also seine Fähigkeit beeinträchtigen, kurze Kraftstöße unbeschädigt aufzunehmen. Es ist hier also ein besonders gleichmäßiges, das heißt impulsarmes oder auch kraftstoßarmes, Spleißen erforderlich.

Um in der Verarbeitung und auf der Eingangsseite in der Veredlung ein möglichst impulsarmes Spleißen des radial äußeren Endes der neuen Rolle (sozusagen ihres Anfanges) an etwa das Ende der zur Neige gehenden Rolle zu bewirken, muss in an sich bekannter Weise die neue Rolle auf eine solche Drehgeschwindigkeit beschleunigt werden, dass ihre Umfangsgeschwindigkeit der der Bahngeschwindigkeit der alten Bahn entspricht. Während dieses Hochbeschleunigens wird das radial äußere Ende durch den Wind geschoben und durch Fliehkräfte belastet. Der eingangs genannte Rollenverschluss dient dazu, dass die Papierrolle diesen Kräften widersteht und nicht "explodiert". Er besteht im Wesentlichen aus einer Verklebung des letzten Endes der neuen Rolle an der nächsten darunter befindlichen Wickellage. Angesichts der hohen Geschwindigkeit von 130 km/h versteht sich, dass die dabei auftretenden hohen Wind- und Fliehkräfte eine erhebliche Verschlussfestigkeit erfordern.

In dem Moment aber, in dem der erwünschte fliegende Spleiß zustande gekommen ist, stört der ehemals so wichtige Rollenverschluss nur noch, behindert er doch das Aufgehen der neuen Rolle und deren Abspulen. Ab diesem Moment ist eine möglichst geringe Verschlussfestigkeit erwünscht.

In dem Bestreben, die scharf gegensätzlichen Forderungen - erst hohe, dann niedrige Festigkeit - miteinander zu vereinbaren, lehrt die Patentschrift US 3,006,568 einen Spaltmechanismus, diesen aber noch an einem zusätzlichen Glied, welches dreischichtig ausgebildet ist, vgl. insbesondere Spalte 3, Zeile 6, letztes Wort bis Zeile 11 sowie die vier Figuren. In der ca. 30 Jahre jüngeren Druckschrift WO 91/08159 wird für den Rollenschluss ein beidseitig klebriges Klebeband vorgeschlagen, welches sich im Moment der Verschlussöffnung spalten soll. Dass hierfür keine zusätzlichen Zwischenglieder erforderlich sind, wie noch vorgenanntes US-Patent annahm, ist hier bereits offenbart. Inhaltlich schließt hieran DE 195 44 010 A1 an.

Während die genannten Entgegenhaltungen noch den Einsatz von Spitzenetiketten beschreiben, also kurze breite Klebebandstücke, die an die Spitze(n) von V- oder W-oder Multi-V-förmig geschnittenen Anfangskanten der radial äußeren Enden solcher Bahnrollen angeklebt wurden, offenbaren die späteren deutschen Gebrauchsmuster G 92 01 286 und 92 15 731 ein Klebeband im Wesentlichen quer über die neue Rolle zu kleben. Als Träger des Klebebandes wird dort eine Folie vorgeschlagen. Das jüngere der beiden beschreibt einen Spaltmechanismus einer aus mehreren Schichten zusammengesetzten Folie zur Öffnung des Rollenverschlusses. Im Anspruch 5 desselben wird eine "spezielle Formung" einer oder beider Kanten des mehrschichtigen Klebebandes vorgeschlagen, "beispielsweise gezackt". Als eine andere Möglichkeit, Rollenverschluss und Spleißfunktion in einem Produkt zu vereinen, lehrt G 92 01 286 im Anspruch 5, den Kleber auf der Unterseite des Klebebandes so einzustellen, dass er nach einmal erfolgter Anklebung nicht mehr anklebefähig ist. Wenn auch offen bleibt, wie dieses nichtklebrige Hinterlassen genau erreicht werden soll, so ist es dennoch als Ziel hier bereits offenbart; der darauf rückbezogene Anspruch 6 schlägt Kleber vor "entsprechend den Memozetteln und Haftetiketten".

Gemäß Druckschrift WO 95/29115 soll die dortige "dritte" Klebstoffschicht, die die Rolle verschließen soll, so ausgebildet sein "for releasing at least said splicing portion from said underlying winding of said roll while leaving the outer surface of said underlying winding in a non-tacky condition". Während die Ansprüche 2 bis 4 schwache oder repositionierbare oder durch Streckung wieder ablösbare Kleber vorschlagen, soll gemäß Anspruch 5 ein aggressiver Haftkleber eingesetzt werden.

Demgegenüber wenden sich die Offenlegungsschriften DE 196 28 317 A1 und DE 196 32 689 A1 wieder den früheren Vorschlägen zu, nach erreichtem Splice den Verschluss durch eine Spaltung zu öffnen. Dabei sind Spleißfunktion und Verschlussfunktion in einem Produkt vereinigt und der zu spaltende Träger besteht aus Papier. DE 199 02 179 A1 entwickelt diese Idee dahingehend weiter, dass dieser Spaltstreifen mit einem bestimmten Versatz zum Spleißklebeband geklebt wird.

Nachdem der im letzten Absatz gewürdigte Ideenkomplex inzwischen eine sehr weite Verbreitung erzielen konnte, haben mehrere namhafte konkurrierende Klebebandhersteller versucht, mehrschichtige Spaltsysteme zu etablieren, siehe dazu beispielsweise die Druckschriften WO 99/46196 und WO 2002/056784.

Die vorliegende Erfindung folgt der Spaltungsidee zur Öffnung des Rollenverschlusses und behandelt das Problem, den Abstand zwischen gewollter hoher Festigkeit während des Hochbeschleunigens und gewollter niedriger Festigkeit zum Zeitpunkt der Verschlussöffnung weiter zu steigern.

Als Stand der Technik könnte relevant erscheinen kanadische Druckschrift CA 2 039 631 bzw. deren prioritätsbegründende deutsche Patentanmeldung DE-A1-4033900 die in Fig. 14, zu der Anspruch 5 zu gehören zu scheint, eine nicht-geradlinige Klebekante lehrt; hier allerdings geht es um eine Papierzerreißting entlang einer Perforation, also nicht durch eine Belastung, die in die Dickenrichtung des Papieres weist. Ähnlichen Inhaltes ist DE 40 33 900 der gleichen Anmelderin.

Als **nächstliegender Stand der Technik** wird das bereits erwähnte deutschen Gebrauchsmuster G 92 15 731 angesehen, insbesondere Anspruch 5. Es wird ein "Rollenkleber" beschrieben, der dadurch gekennzeichnet sein solle, dass eine oder beide Kanten der "Mehrschichtenfolie" nicht parallel sondern speziell geformt sind, beispielsweise gezackt ausgebildet sind. Hiervon ausgehend stellt sich die Aufgabe solche Kantenkonturen für spaltbare Klebebänder anzugeben, die trotz hoher Verschlussfestigkeit eine möglichst leichte Öffenbarkeit des Verschlusses erlauben.

Wie schon in dem deutschen Gebrauchsmuster G 92 15 731 vorgeschlagen, wurden auch im Hause der Anmelderin Versuche gemacht mit einem zackigen Kantenverlauf. Für einen durchschnittlichen Fachmann drängt sich diese Gestaltung nicht nur wegen deren besonders einfachen Beschreibbarkeit auf sondern auch, weil dies der älteren V-förmigen, später multi-V-förmigen Verklebung am genauesten entspricht. Die Praxis zeigte jedoch, dass die naheliegende Annahme, dass die Gestaltung zu einer völligen Vergleichmäßigung der zu überwindenden Papierfestigkeit über der Zeit auftrat, nicht richtig war, sondern jede gezackte Kante des Spaltklebebandes zu einer Verschlechterung gegenüber den bisherigen Ausführungen des ansonsten gleichen Spaltstreifens mit geraden Kanten zu beiden Seiten führte. Nicht nur, dass die Mittelwerte der gewollt hohen Spaltfestigkeit und vor allem des gewollt niedrigen Öffnungswiderstandes keineswegs günstiger lagen, vor allem waren die Schwankungen um diese jeweils erreichten Mittelwerte größer. Diese Ergebnisse führten zu lang anhaltendem Verwerfen dieser Idee durch die Fachleute.

Die erfindungsgemäße These besteht darin, dass die ersten negativen Versuchsergebnisse ihre Ursache nicht in der Abweichung von der Geradlinigkeit schlechthin haben, sondern in eben jener Zackigkeit. Ferner wurde angenommen, dass insbesondere die scharfe Spitze am vorlaufenden Ende eines jeden Zackens störe und schlug demzufolge als das wichtigste Element der erfindungsgemäßen Lösung vor, dass diejenigen Vorsprünge des in etwa axial auf die anzufügende Rolle - in der Regel ist dies eine Papierrolle, es könnte aber auch eine Kunststofffolie oder Metallfolie oder dergleichen sein - aufzubringenden Klebebandes, die dazu bestimmt sind, bei der Rotation der anzufügenden Rolle vorzueilen, gerundet - also eben nicht scharf eckigausgeführt sind. Man könnte diese Verrundung auch als eine stetig differenzierbare Abplattung bezeichnen in deren Folge es an jedem Vorsprung eine Tangente parallel zur Gesamtlängserstreckung des Klebebandes gibt.

Inzwischen konnte in Laborversuchen nachgewiesen werden, dass die vorgeschlagene Verrundung der voreilenden Bereiche tatsächlich zu einer Senkung der Anfangsspaltkraft führt und dadurch den hinzunehmenden Kraftstoß in der frisch zusammengefügten Bahn im Moment der Öffnung des Rollenverschlusses senkt. Dadurch dürfte nun auf dem besonders sensiblen Tiefdruckpapier eine weitere Senkung der Reißerquote eintreten. Dieses erfreuliche Ergebnis ist für durchschnittliche Fachleute überraschend, nachdem die vorbekannte Abweichung von geradlinigen Klebebandkanten, nämlich eine Zackigkeit, ganz im Gegenteil zu einer Verschlechterung geführt hatte.

Diese Lösung lag auch insofern nicht nahe, als hierfür erstmal das frühere Ziel völliger Vergleichmäßigung der auf die frisch gefügte Papierbahn einwirkenden Spannkraft aufgegeben werden musste. Die Erfindung begnügt sich mit dem Ziel einer Verkleinerung des maximalen Kraftimpulses; dieses bescheidenere Ziel wird aber zuverlässig erreicht.

Die nachteilige Wirkung der vorbekannten eckigen Gestaltung der an sich vorbekannten Welligkeit wird dadurch erklärt, dass ja eben nicht ein Reißen des Spaltpapieres durch Kräfte in der Umfangsrichtung der Papierrolle erstrebt werde (wie etwa bei DE 38 34 334 A1 gemäß Fig. 5 oder CA 2 039 631 [aus DE 40 10 704 von Firma Voith], dort insbesondere Anspruch 5 in Verbindung mit Fig. 14), also eben keine Rissebene, die durch eine Axiale und eine Radiale aufgespannt wird, sondern ein Reißen durch Kräfte in der Radialrichtung der Papierrolle, also eine Rissebene, die durch die Umfangsrichtung und die Axiale aufgespannt werde. Hierzu aber sei es erforderlich, dass zunächst eine ausreichende Fläche aufgebaut werde, die dann die nötige Reißkraft (in dieser speziellen Richtung auch "Spaltkraft" genannt) erst bewirke.

An der Klebebandkante, die bezüglich der Laufrichtung der zu fügenden Bahn vorläuft, erzeuge nämlich die vorbekannte Zackenspitze das Problem, dass dort noch - mangels Erstreckung in Bahnlaufrichtung (also Klebebandbreite) und in Bahnquerrichtung (also Klebebandlänge) - noch kaum eine Klebefläche existiere, welche die nötige Initialkraft aufbauen könne, um den gewünschten Beginn eines tangentialen Risses zu erzeugen, ab dem erst es zu einem weiteren Aufspalten komme. Ab dem Durchlauf durch einen solchen Zackenpunkt wachse dann die zerrende Klebefläche zwar quadratisch an, aber es sei dann nicht mehr genau kontrollierbar ab wann die Spaltfestigkeit überwunden werde und es sei bis dahin bereits einige Verformungsenergie in der gefügten Bahn aufgenommen worden, die sich im Moment des Spaltens entlade. Ein kraftbestimmter Mechanismus wie dies einer gewesen sei, sei nun einmal wegen der dazwischen liegenden Elastizitäten und Plastizitäten und Trägheiten samt all ihrer Schwankungen (Papier ist ein Naturprodukt!) mit wesentlich größeren Streuungen verknüpft als etwa ein durch eine Geometrie bestimmtes System. Der entscheidende Vorteil der erfindungsgemäßen Lösung sei, dass das (gewünschte!) Versagen des Spaltpapieres wirklich von Anfang an sicher in einem Spalten liege und keine anderen Versagensarten am Beginn auftreten können.

Durch die erfindungsgemäße Gestaltungsforderungen konnte eine wesentliche Verbesserung erbracht werden.

Natürlich kann die Amplitude der hier vorgeschlagenen Welligkeit der Kanten des Spaltklebebandes nicht beliebig weit getrieben werden, weil dieses spaltbare Klebeband ja auch noch in seiner weiteren Verarbeitung - insbesondere seiner Vereinigung mit einem solchen Klebeband, welches die Verbindung zwischen dem Ende der zur Neige gehenden Bahn mit dem Anfang der neuen Bahn bewirken soll - handelbar sein muss. Wird für dieses Handeln kein Transferklebeband benutzt, so beträgt die Amplitude zweckmäßigerweise maximal ein Drittel, besonders bevorzugt etwa ein Viertel der Klebebandbreite. Im ersten Falle verbleibt als gerade durchgehende Reststrangbreite des Klebebandes ein Drittel seiner Gesamtbreite, im zweiten Falle die Hälfte seiner Gesamtbreite. Falls mit einem Transferklebeband gearbeitet würde, welches ja in gewisser Weise den empfindlichen Spaltstreifen schient, können auch größere Amplituden gewählt werden.

Die Gefahr des Faltenwurfes beim Handhaben wird aber auch beeinflusst von der "Wellenlänge", womit der Abstand von voreilender Zunge zu voreilender Zunge gemeint ist: Desto größer sie gewählt ist, umso größer der Faltenwurf. Als zweckmäßig werden Wellenlängen zwischen dem 0,6-fachen und 2,4-fachen der Spaltklebebandbreite erwartet.

Des weiteren ist es von Vorteil, diem erfindungsgemäßen Spaltstreifen aus einem besonders spaltfreudigen Material herzustellen und von der gegenwärtig üblichen Breite für den Spaltstreifen von etwa 10 mm auf etwa 12 bis 14 mm überzugehen.

Ferner empfiehlt es sich gemäß Anspruch 2, dass die ungerade Kante an ihren am weitesten zurückspringenden Stellen (z) ebenfalls gerundet ausgebildet sind, wobei aber an diesen Stellen die Krümmung wesentlich schärfer ist als an den vorspringenden Stellen. Zur weiteren Detaillierung des Begriffes "wesentlich" im vorstehenden Satze wird angemerkt, dass im Sinne einer optimalen Raumausnutzung der Krümmungsradius am voreilendsten (=vorspringenden) Punkte eines jeden Vorsprunges doppelt so groß sein sollte wie am nacheilendsten (=zurückspringenden) Punkte der selben Kante, weiter bevorzugt fünfmal so groß; eine exakt scharfe Ecke sollte allerdings auch am zurückspringenden Punkte vermieden sein, um nicht infolge übergroßer Kerbwirkung bei Belastung des Splice-Klebebandes in seiner Längserstreckung die Handhabbarkeit im Produktionsprozess zu verlieren. Ähnlich wie schon anlässlich der Diskussion der zweckmäßigen Amplitude dargelegt, kann bei "Schienung" des Spaltklebestreifens durch ein Transferband der Krümmungsradius im zurückspringendsten Punkte besonders klein gewählt werden, wodurch noch etwas mehr Bauraum frei wird für die Gestaltung des vorspringenden Bereiches und dort einen noch etwas größeren Krümmungsradius ermöglicht.

Der erfindungsgemäße Übergang von einem Zickzack auf eine Welle bedingt zwangsläufig, dass sich auf einer jeden Flanke eines Vorsprunges ein Wendepunkt befindet. Aus weiteren theoretischen Überlegungen wird abgeleitet, dass ein leicht S-förmiger Verlauf der Flanken zur bestmöglichen Reißkraftverteilung und damit Verstetigung der Verschlussöffnung führen müsse. Darum empfiehlt Anspruch 3, dass die ungerade Kante jeweils zwischen einer weitesten vorspringenden Stelle (v) und der ihr nächstliegenden am weitesten zurückspringenden Stelle (z) stetig differenzierbar ist mit drei Wendepunkten.

Die gleichen Gesichtspunkte der bestmöglichen Bauraumaufteilung, die schon zur bestmöglichen Bemessung der Krümmungsradien in den Extrema der Wellenkontur beschrieben worden sind, führen auch dazu, dass vorzugsweise - wie im Anspruch 6 gelehrt - das Negativ eines jeden Rücksprunges (Z) enger ausgebildet ist als das Positiv eines benachbarten Vorsprunges (V).

Durch die Erfindung ist es auch möglich, den Spaltkraftverlauf weiter zu vergleichmäßigen, und zwar gemäß Anspruch 7 dadurch, dass die ungerade Kante zwei oder mehr Scharen ($V_1$, $V_2$) von Vorsprüngen (V) aufweist, die unterschiedlich weit vorspringen nach einem regelmäßigen Muster. An den weiter vorspringenden Vorsprüngen beginnt das Spalten eher als an den weniger weit vorspringenden Vorsprüngen. Gerade der Spaltungsbeginn aber benötigt mehr Kraft als das Fortsetzen einer bereits begonnenen Spaltung. So ist zwar die Anzahl der Kraftstöße erhöht (bei zwei Scharen verdoppelt, bei dreien verdreifacht und so weiter), ihr jeweiliger Betrag aber ist gesenkt.

Die Erfindung ist zwar im Wesentlichen entstanden durch eine tiefere Durchdringung der mechanischen Vorgänge bei der Spaltinitiierung. Diese findet nach im wesentlichen axialen Aufbringen auf die zu verschließende Rolle - egal, ob vorher (wie bevorzugt) mit einem Splice-Klebeband vereinigt oder nicht - an der dann voreilenden Kante statt. Erfindungsgemäß wird ferner eine darauf abgestimmte Gestaltung der nachlaufenden Kante vorgeschlagen. Bliebe diese nämlich gerade, so hätte das spaltbare Klebeband mindestens einen der beiden folgenden möglichen Nachteile:

a) im Bereich seiner Vorsprünge eine zu große Klebebandbreite und damit einen zu hohen Energieeintrag zur Vollendung der Spaltung oder

b) im Bereich seiner Rücksprünge eine zu geringe Klebebandbreite und damit ein dort bereits während des Hochbeschleunigens beginnendes Öffnen des Rollenverschlusses.

Der Nachteil b) wäre geradezu fatal und der Nachteil a) würde zumindest einen großen Teil dessen wieder "auffressen" was in der besseren Verteilung der Spaltinitiierung gewonnen worden ist. Um dies zu vermeiden empfiehlt Anspruch 8, dass beide Kanten des Klebebandes ungerade sind mit der gleichen Periodenlänge. Zweckmäßigerweise besteht zwischen den beiden wellenförmigen Kanten kein Phasenversatz.

Mit einer geeigneten Abstimmung der Amplitude von vor- und nacheilender Welle aufeinander lässt sich der kleinstmögliche Bandspannungsstoß bei der Rollenverschlussöffnung einstellen. Das Optimum liegt etwa dort, wo die Amplitude an der nachlaufenden Kante etwa 85% derjenigen an der voreilenden Kante beträgt. Eine mathematisch recht gute und sehr einfache Lösung bestünde darin, für die nacheilende Kante die gleiche Funktion zu verwenden wie für die voreilende, jedoch die Amplitude mit dem Faktor 0,85 multipliziert.

Um so herzustellen, müsste aber entweder hingenommen werden, dass

a) beim Schneiden der einzelnen Bänder aus dem Meisterband (das zweckmäßigerweise in einer Breite zwischen 0,5 m und 4 m hergestellt wird als Vorläuferprodukt) Abfall entsteht und überdies 2 Schnitte pro Band erforderlich sind, oder, dass

b) die Wellenfunktion punktsymmetrisch ist - was allerdings eine Krümmungsdifferenzierung zwischen Vorsprung und Rücksprung vereitelt - und, dass die Stanzwalze entlang ihrer Axialen abwechselnd einen Stanzring großer und einen Stanzring kleiner Wellenamplitude aufweist, wobei des weiteren nun aus dem erzeugten Gatter von einzelnen Klebebändern entweder (in der Axialen durchgezählt) das erste, dritte, fünfte, siebte und so weiter herausgegriffen werden und einmal um ihre Längsachse gedreht werden oder eben das zweite, vierte, sechste, achte und so weiter, um am Ende wieder ein Gatter gleicher, gleichgerichtet nebeneinander liegender Einzelklebebänder zu erzeugen. haben; ferner sollten sie axial etwas auseinander gezogen werden, wonach erst die Einzelstreifen von spaltfähigem Klebeband entweder gleich aufgespult und zum (separaten) Rollenverschluss angeboten werden können oder - wie bevorzugt - mit einem die Verbindung zwischen alter und neuer Bahn herstellenden Klebeband zusammengefügt (Jargon: "verheiratet") werden können. (Wobei als Alternative zur Einzelbanddrehung es natürlich auch möglich wäre, zunächst aufzurollen (also nicht direkt zu verheiraten) und dann jede zweite Rolle umzudrehen.)

Zumal aber das erwartete Optimum in der Amplitudenbemessung der Wellengestalt für die Formung der voreilenden und der nacheilenden Kante (100% zu 85%) recht flach ist, empfiehlt es sich, gemäß Anspruch 9 die vor- und die nacheilende Kante des Klebebandes parallel zueinander verlaufen zu lassen, sodass die Klebebandbreite trotz der Nichtgeradlinigkeit der beiden Klebebandkanten überall gleich ist. Zu dieser Abwandlung werden alle Stanzringe der Stanzwalze identisch ausgeführt.

Bei solcher Ausführung wird

gegenüber a)
Abfall vermieden, was die Materialkosten senkt, und es ist nur ein Schnitt pro Einzelstreifen (abgesehen vom letzten Einzelstreifen) des spaltbaren Klebebandes erforderlich, was sowohl in Unterhaltung- als auch in Anschaffungskosten der Stanzringe eine Kostenhalbierung bewirkt und
gegenüber b)
eine stumpfere, plattere Gestaltung der Vorsprünge als der Rücksprünge ermöglicht sowie der Aufwand vermieden, jedes zweite Band drehen zu müssen.

Diese Vorzüge werden für so groß erachtet, dass alle später noch genauer gezeigten Ausführungsbeispiele hierauf zurückgreifend die vor- und nacheilende Kante gleich gestaltet haben.

Zur Herstellung eines solchen spaltbaren (=spaltfähigen) Klebebandes würde in an sich bekannter Weise zunächst ein Meisterband hergestellt, also ein sehr breites spaltbares Papierband zumindest einseitig mit einer Selbstklebemasse beschichtet. Dies würde am Ende zu einem Produkt gemäß Anspruch 11 führen können. Den Hauptgedanken kurz verlassend soll dies näher erläutert werden:

Im Unterschied zu den noch bis in die Mitte der 70er-Jahre des letzten Jahrhunderts vorherrschenden vom Anwender aufzustreichenden Leimen oder durch Wasserbenetzung klebrig zu machenden Klebemassen (ähnlich der Rückenbeschichtung von Briefmarken) führt dies zu einer für den Kunden wesentlich einfacheren und weniger fehleranfälligen Aufbringung auf die an die alte Bahn anzufügende neue Papierrolle. Auch wird so eine Wassereinwanderung in das zu fügende Papier vermieden, was dort zu Faltenwurf und Festigkeitsabfall führen kann, also die Reißerwahrscheinlichkeit erhöhen würde. Zweckmäßigerweise wird die mindestens einseitige Beschichtung mit Klebemasse sofort nach ihrer Erstellung mit einem Liner (z. B. silikonisiertes Papier) abgedeckt, um eine Verschmutzung vor der Anwendung des Produktes beim Endkunden zu vermeiden.

In der Produktanwendung gehört diese selbstklebefähige Seite nach radial innen weisend auf die für einen Splice vorzubereitende neue Rolle.

Vorzugsweise wird dieses spaltbare Klebeband an einem weiteren (aber nicht spaltfähigen) Klebeband befestigt ("verheiratet"), das die eigentliche Verbindung zur alten Bahn herstellt. Diese Befestigung kann beliebig erfolgen, zum Beispiel durch einen auf der entsprechenden Unterseite des nicht spaltfähigen Klebebandes angeordneten Klebstoffstreifen, oder durch einen Klebstoffauftrag auf der zweiten Seite des spaltfähigen Klebestreifens, wobei dieser Klebstoff vorzugsweise selbstklebend ausgeführt ist (denn Selbstklebemassen sind bei einem Klebebandhersteller besonders leicht verfügbar), aber auch aushärtend ausgebildet sein kann.

Zum Hauptgedanken zurückkommend: Nach dieser Beschichtung würde weiterhin in an sich bekannter Weise dieses sehr breite, im Papierträger spaltbare Klebeband in eine Vielzahl schmalerer Klebebänder "aufgeschnitten". Es versteht sich, dass zur Herstellung erfindungsgemäßer Spaltklebebänder (=spaltfähiger Klebebänder) diese "Schnitte" nicht mehr geradlinig sein dürfen, weshalb die bislang üblichen Rollenmesser ausscheiden. Innerhalb einer Schutzgasatmosphäre könnte in etwas weiterer Zukunft ein "Schneiden" mit einem - möglicherweise zur Schmauchreduzierung gepulsten - Laser in Frage kommen, wobei zweckmäßigerweise die Schar von Laserstrahlen periodisch quer zur Vorschubrichtung des Klebebandes bewegt wird und dies zweckmäßigerweise (weil massearm und dadurch selbst bei hohen Vorschubgeschwindigkeiten gut reproduzierbar arbeitend) durch einen verstellbaren Spiegel; dabei ist es nicht erforderlich pro Schneidstrahl einen zu haben, denn es geht auch über einen gemeinsamen verstellbaren. - Mit leichterer Beherrschung der Explosions- und Brandgefahr ist das ungerade "Schneiden" aber auch mit Stanzwerkzeugen möglich; besonders bevorzugt ist eine stetig abrollende Stanzwalze mit entsprechend wellenförmig gestalteten Stanzringen.

Zwar ist in letzter Zeit von Wettbewerbern die an sich alte Idee - nämlich ein Spaltpapier aus zwei Papierschichten zusammenzukleben und die Spaltung in der Klebefläche anzuordnen, also nicht im Werkstoff Papier- durch eine Weiterentwicklung der Klebung von einem einschichtigen zu einem dreischichtigen Aufbau des Typs Barriereschicht, Kleberschicht, Barriereschicht, wieder belebt worden, aber da ja nun gerade ein hochgradig anisotropes Verhalten zur Erleichterung des Spaltens erwünscht ist, was sich mit faserigen Werkstoffen am besten erreichen lässt, soll das erfindungsgemäße spaltfähige Klebeband gemäß Anspruch 10 vorzugsweise einen einstückig aus Papier hergestellten Träger (2) aufweisen, wie dies an sich ebenfalls bereits vorbekannt ist (DE 196 28 317). Dabei soll die Spaltung vorzugsweise etwa mittig im einstückig hergestellten Papier erfolgen. Zwar bedarf es dabei großer Erfahrung und scharfer Qualitätsüberwachung, um eine konstante Spaltfestigkeit zu erreichen, letztlich ist diese aber nach Überzeugung der Anmelderin in einer Serienfertigung, die ihre Pionierphase inzwischen weit hinter sich gelassen hat, sicherer zu erreichen als die Zusammensetzung aus allzu vielen Einzelteilen, die eher in eine Pionierphase gehören würde. Gleichwohl ist die Erfindung aber auch bei den weniger erfolgversprechenden mehrschichtigen Spaltsystemen einsetzbar.

Die Erfindung wird nachfolgend anhand einiger Figuren näher erläutert. Es zeigt:

Fig. 1    in maßstabsgerechter Draufsicht ein Klebeband mit erfindungsgemäßer Wellenform an seinen beiden Kanten, wobei die Wellenformen an beiden Kanten gleich sind und die Vorsprünge in zwei Scharen gegliedert sind,

Fig. 2    in einem Diagramm die Wellenform aus Fig. 1 isoliert, jedoch mit einem im Verhältnis zur x-Richtung vergrößerten Maßstabe in der γ-Richtung,

Fig. 3    analog Fig. 2 eine solche Wellenform, bei der alle Vorsprünge "synchron" liegen,

Fig. 4    eine solche Abwandlung der Wellenform gemäß Fig. 2, dass die Vorsprünge (der voreilenden Kante) in drei Scharen gegliedert ist,

Fig. 5    eine solche Abwandlung der Wellenform gemäß Fig. 2, dass die Verrundung in den Rücksprungen größer ist,

Fig. 6    analog der Figur 1 in maßstabsgerechter Draufsicht ein Klebeband mit Kanten gemäß der Kurve aus Figur 5,

Fig. 7    maßstäblich in einer Draufsicht ein erfindungsgemäßes Muster mit mathematisch einfacher zu beschreibendem Verlauf der gewellten Kanten,

Fig. 8    in einem Diagramm die Spaltkraft eines Papierstreifens über dem Weg, wobei der Papierstreifen gerade Kanten hat (prior art),

Fig. 9    in einem Diagramm analog Figur 8 den Spaltkraftverlauf für einen Papierstreifen, der gewellte Kanten aufweist, ansonsten aber mit dem aus Fig. 8 übereinstimmt,

Fig. 10    in einer nicht maßstabsgerechten, geschnittenen Stirnansicht ein erfindungsgemäßes Splice-Klebeband, das auf seiner Unterseite mit einem erfindungsgemäßen spaltfähigen Klebeband mit wellenförmigen Kanten ausgestattet ist
und

Fig. 11    in einer nicht maßstabsgerechten Ansicht von der Seite eine neue Papierrolle, deren Anfang vorbereitet wurde zum fliegenden Spleißen an eine zur Neige gehende alte Papierbahn, und zwar durch Anwendung eines Spliceklebebandes gemäß Fig. 3.

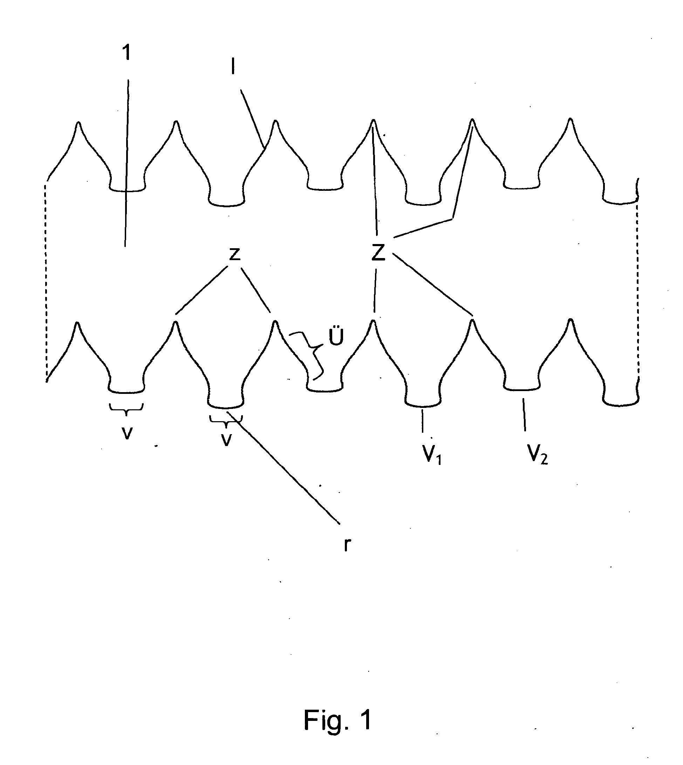

**Figur 1** zeigt in maßstabsgerechter Draufsicht ein Klebeband 1 mit erfindungsgemäßer Wellenform sowohl an seiner linken Kante 1 als auch an seiner rechten Kante r. Dabei entstammen die Begriffe "links" und "rechts" der Welt der Herstellung dieses spaltbaren Klebebandes; in der beabsichtigten Anwendung, also einem zumindest im Wesentlichen Verkleben in axialer Richtung auf eine neue und auf synchrone Umfangsgeschwindigkeit zu beschleunigende Rolle, wird eine beider Seiten dann "voreilend" und die andere "nacheilend"; in jedem Falle wird die Kante mit ihren platteren, verrundeteren Vorsprüngen - hier die rechte - die voreilende sein.

Bei der am meisten bevorzugten Ausführung der Erfindung gemäß Figur 1 sind die Vorsprünge V in zwei Scharen $V_1$, $V_2$ gegliedert; dabei springen die Vorsprünge $V_1$ weiter vor als die Vorsprünge $V_2$.

Besonders wichtig gegenüber der älteren Zackenform ist, dass der vorderste Bereich v der Vorsprünge V verrundet ist, sodass nicht eine Spitze in die Zone des Spaltungsbeginnes einläuft sondern eine stumpfe oder gar abgeplattete Zone. Zweckmäßigerweise sollte die Stumpfheit oder Abplattung etwas stärker ausgeprägt sein an den vordersten Bereichen der weniger weit vorspringenden Vorsprünge $V_2$ als an den vordersten Bereichen der weiter vorspringenden Vorsprünge $V_1$.

Hinter der Phase des Spaltungsbeginnes, die durch die erfindungsgemäße Gestalt - egal ob sie nun als Spitzenverrundung oder Spitzenabplattung bezeichnet wird - stark an Zuverlässigkeit gewonnen hat, ist irgendwo der Bereich anzuordnen, der für das Weiterspalten über die gesamte Breite der neuen Rolle hin verantwortlich ist. In diesem Bereich muss die Kante schräg laufen, also nicht nur in Umfangsrichtung der neuen Rolle. Um den Stoß durch den Spaltbeginn erst etwas verklingen zu lassen, bevor die Zusatzlast für das Weiterreißen eingeleitet wird, empfiehlt es sich, zwischen dem Bereich des Spaltungsbeginnes und dem des Weiterspaltens noch einen kleinen Übergangsbereich anzuordnen, in dem die Zusatzlast des Weiterreißens zumindest reduziert ist durch eine geringere Kantenneigung zur Umfangsrichtung; in der hier erläuterten Figur 1 ist dieser Übergangsbereich ü sogar so stark ausgeprägt, dass die Kante hier geringfügig invers geneigt ist, sodass der Fortschritt der Spaltungsbreite über der Umfangsrichtung der neuen Rolle, deren Verschluss gerade geöffnet wird, also nicht nur vermindert ist, sondern die Spaltungsbreite sogar geringfügig zurückgeht. So bildet sich eine charakteristische schwache Einschnürung hinter dem vordersten Bereich v eines jeden solchen Vorsprunges V.

Anders als die Vorsprünge V, die hier in zwei verschiedenen Weiten vorragen, liegen die Extrema z der Rücksprünge Z (die natürlich an der nacheilenden Kante *l* wie Vorsprünge erscheinen) in einer Flucht. - Natürlich, wenn auch hier nicht gezeigt, könnte zur noch besseren Verteilung des Stoßimpulses die Gestaltung zu noch mehr Scharen von verschieden weit reichenden Vorsprüngen weiter entwickelt werden, zum Beispiel drei Vorsprüngen $V_1$, $V_2$ und $V_3$. Zweckmäßigerweise gibt es dann zwei Scharen verschieden weiter Rücksprünge $Z_1$ und $Z_2$. Die Anzahl der Rücksprungscharen sollte immer um 1 niedriger liegen als die Anzahl der Vorsprungscharen.

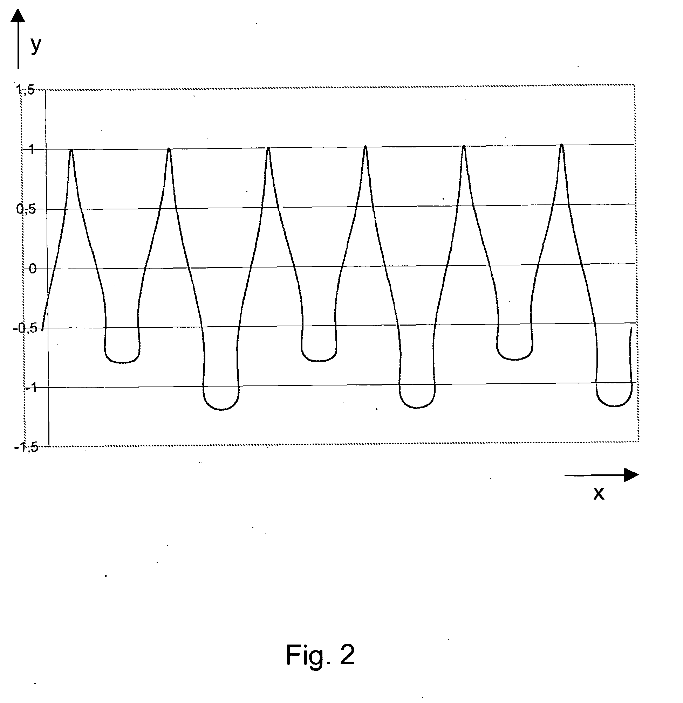

**Figur 2** zeigt in einem Diagramm die Wellenform aus Figur 1 isoliert, jedoch mit einem im Verhältnis zur x-Achse vergrößerten Maßstabe der γ-Achse. Diese Wellenform ist - aufgrund der genannten Einschnürung im Zwischenbereich - nicht als Funktion y(x) darstellbar; vielmehr ist y(x) nur eine Relation. Dahingestellt, dass der Erfinder das technische Optimum der Wellenform bei einer nicht so starken Ausprägung des Übergangsbereiches bis hin zu einer Einschnürung daselbst sieht, so muss die mathematische Beschreibung seiner Überzeugung nach aber eben doch so gestaltet sein, dass eine solche problemlos erzeugt werden kann. Dies schafft der Erfinder dadurch, dass er einen -als "α" bezeichneten - Parameter einführt und sowohl y als auch x als Funktion dieses Parameters definiert und am Ende y über x abbildet, also die Relation y(x).

Dabei lauten (bei Angabe von α in Altgrad)

$$y(\alpha) = \sin(\pi/180 \cdot \alpha) \cdot (1 + h \cdot \sin(i \cdot \pi/180 \cdot \alpha)) - h + j \cdot \sin(l + \pi/180 \cdot \alpha/k)$$

wobei

> $j = 0{,}2$
> $h = 0{,}4$
> $i = 1$
> $l = -\pi/4$
> $k = 2$

und

$$x(\alpha) = \alpha + a \cdot (1 - b \cdot \cos(c \cdot \pi/180 \cdot \alpha)) + d \cdot (1 - e \cdot \cos(f \cdot \pi/180 * \alpha))$$

wobei

> $a = 1{,}2$
> $b = 16$
> $c = 3$
> $d = 0{,}4$
> $e = 12$
> $f = 5$

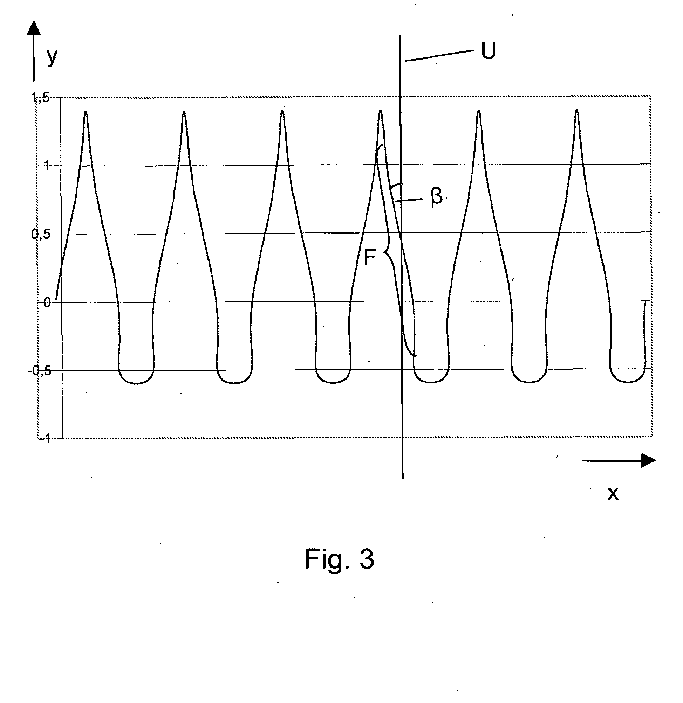

**Figur 3** zeigt eine solche Vereinfachung der Figur 2, bei der die Vorsprünge V alle in einer einzigen Flucht liegen. Dabei lauten (bei Angabe von α in Ältgrad)

$$y(\alpha) = \sin(\pi/180 \cdot \alpha) \cdot (1 + h \cdot \sin(i \cdot \pi/180 \cdot \alpha))$$

wobei

> $h = 0{,}4$
> $i = 1$

während die Funktion für x unverändert geblieben ist, also

$$x(\alpha) = \alpha + a \cdot (1 - b \cdot \cos(c \cdot \pi/180 \cdot \alpha)) + d \cdot (1 - e \cdot \cos(f \cdot \pi/180 * \alpha))$$

wobei

a = 1,2
b=16
c = 3
d = 0,4
e = 12
f = 5

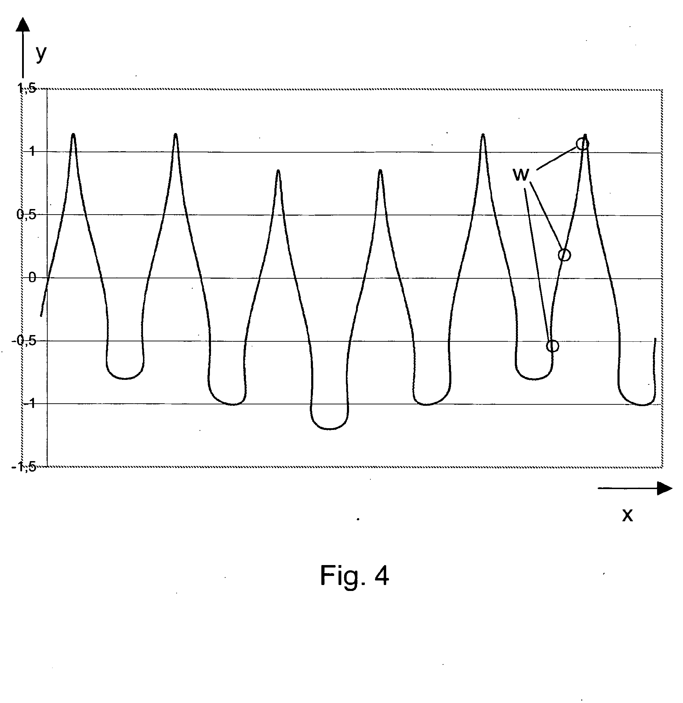

Man kann natürlich zur noch besseren Verteilung des Stoßes durch den Spaltungsbeginn drei Scharen von Vorsprüngen erzeugen, z. B so, wie **Fig. 4** zeigt. Um diese Relation zu erhalten lauten die Funktionen:

$$y(\alpha)=\sin(\pi/180 \cdot \alpha) \cdot (1 + h \cdot \sin(i \cdot \pi/180 \cdot \alpha)) - h + j \cdot \sin(l + \pi/180 \cdot \alpha/k)$$

wobei

j = 0,2
l = π/8
k=4

Der Funktionstyp gleicht also dem der Figur 2, nur für l und k sind andere Werte eingesetzt.
Währenddessen ist auch hier die Funktion für x unverändert geblieben" also

$$x(\alpha) = \alpha + a \cdot (1 - b \cdot \cos(c \cdot \pi/180 \cdot \alpha)) + d \cdot (1 - e \cdot \cos(f \cdot \pi/180 * \alpha))$$

wobei

a = 1,2
b = 16
c = 3
d = 0,4
e = 12
f = 5

An einer der Flanken sind zur Verdeutlichung die drei Wendepunkte w markiert. Dabei liegt der am weitesten zurückspringende dieser drei Wendepunkte schon fast an der tiefsten Stelle des Rücksprunges selber. Es versteht sich, dass - wenn man es im wahrsten Sinne des Wortes auf die Spitze treiben wollte - dieser Wendepunkt exakt an der tiefsten Stelle des Rücksprunges zu liegen käme und dort dann mit dem am weitesten zurückspringenden Wendepunkt der als nächstes anschließenden Flanke zusammenfiele.

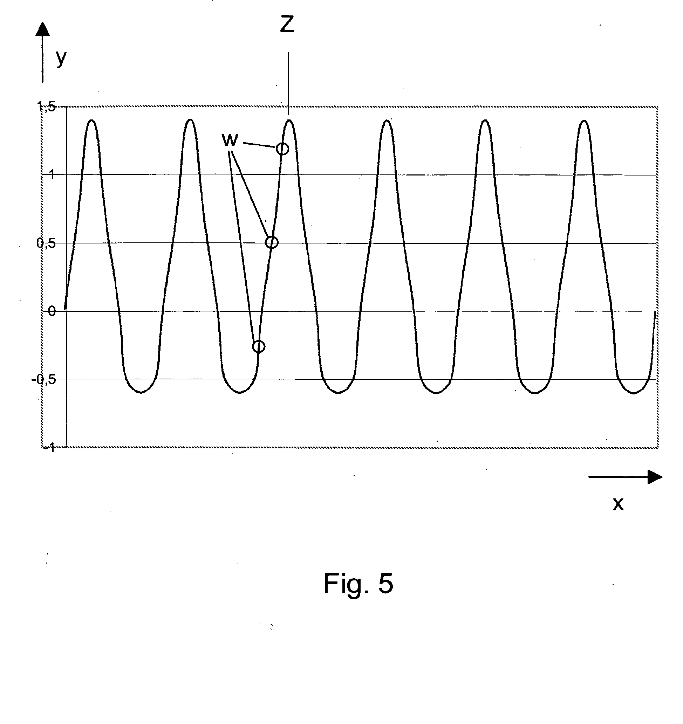

**Figur 5** zeigt eine solche Abwandlung der Wellenform gemäß Fig. 3, dass die Verrundung in den Rücksprungen größer ist. Dies ergibt eine leichtere Applizierbarkeit des unter Verwendung eines mit solchen Kanten ausgestatteten spaltfähigen Klebebandes hergestellten Splice-Klebebandes auf die neue zunächst hiermit zu verschließende Rolle, die danach auf eine - zur alten, zur Neige gehenden Bahn synchrone - Geschwindigkeit zu beschleunigen ist. Diese leichtere Applizierbarkeit liegt an der verringerten Kerbwirkung an den äußersten Stellen z der Rücksprünge. Die den Splice vorbereitende Person beansprucht das Splice-Klebeband nämlich zwecks faltenfreien Auftrages etwas in seiner Längsrichtung, also der Axialrichtung der zu verschließenden Rolle. Von der dabei auftretenden leichten Dehnung bleibt auch das untergeklebte spaltfähige Klebeband mit seinen erfindungsgemäß gewellten Kanten nicht ganz verschont und deshalb kommt es zu einer gewissen Spannungskonzentration an diesen kerbartigen Rücksprüngen, die naturgemäß umso deutlicher ausfallen, desto enger dort der Krümmungsradius ist.

Des weiteren erleichtert dem Spliceklebeband-Hersteller eine sanftere, weniger scharfe Krümmung die Hochzeit zwischen unterem spaltfähigem System und oberem Verbindungsklebeband; denn auch während dieses hochzeitlichen Zusammenklebens wird in der Regel eine gewisse Zugspannung hinzunehmen sein.

An einer der Flanken sind beispielhaft auch hier die Wendepunkte gezeigt. Zwecks wesentlich sanfterer Krümmung an den Rücksprüngen Z ist hier der am weitesten zurückliegende Wendepunkt deutlich weiter vom Extremum des Rücksprunges entfernt. Weiter fällt auf, dass hier der Krümmungswechsel am mittleren Wendepunkt deutlich kleiner ausfällt als in Fig. 4. Die sich dadurch ergebende fast gerade Gestaltung des Mittenbereiches der Flanke passt zu solchen Papierqualitäten als zu spaltendes Material, die relativ wenig Unterschied zeigen zwischen der Initialspaltkraft und der für die Spaltfortsetzung erforderlichen Kraft.

Der Preis für weniger scharfe Rücksprünge ist natürlich eine schmalere Gestaltung der Vorsprünge mit einer etwas geringeren Abplattung dort und/oder eine stärkere Flankenneigung im Bereich der Spaltungsfortsetzung. Den optimalen Kompromiss kann der Fachmann für das jeweils zu fügende Bahnmaterial durch eine Versuchsreihe ermitteln.

In diesem Absatze soll prinzipiell beschrieben werden, wie sich die Beschaffenheit des zu fügenden Bahnmateriales auswirkt: Bei sehr empfindlichem, spröden Bahnmaterial, beispielsweise beim dünnen Massenhochglanzpapier für Illustrierte, wird man ein etwas höheres Sensibilitäts-Erfordernis des splicevorbereitenden Personals hinnehmen für eine recht scharfe Gestaltung der Rücksprünge und den so gewonnenen Bauraum für einen besonders schonenden Spaltungsbeginn und/oder Spaltungsfortsetzung verwenden, also Vorsprünge stärker verrunden/abplatten und/oder Flanken F mit kleinerem Winkel β zur Umfangsrichtung U neigen (siehe etwa Figur 3). Für robusteres und/weniger schnell verarbeitetes Papier hingegen kann auch ein größerer Spannungsstoß infolge des Spaltungsbeginnes hingenommen werden und man wird sich dafür schmaler ausgebildete Vorsprünge und/oder größere Flankenwinkel β leisten und dafür stärker verrundete Rücksprünge gewinnen mit leichterer Herstellung und Aufbringung des Spliceklebebandes mit einem spaltfähigen System - also in der Regel einem spaltfähigen Klebeband - mit erfindungsgemäß gewellten Kanten.

Um das Wesentliche dieser Variation nicht mit anderen Variationen zu verdecken, insbesondere nicht der Frage, in wie viele Scharen die Vorsprünge gegliedert sein sollen, liegen hier alle Vorsprünge V in einer einzigen Flucht.

Die Gleichungen, die diese Kurve erzeugen, lauten unverändert (bei Angabe von α in Altgrad)

$$y(\alpha) = \sin(\pi/180 \cdot \alpha) \cdot (1 + h \cdot \sin(i \cdot \pi/180 \cdot \alpha))$$

wobei unverändert

$h = 0{,}4$
$i = 1$

während die Funktion für x unverändert geblieben ist, also

$$x(\alpha) = \alpha + a \cdot (1 - b \cdot \cos(c \cdot \pi/180 \cdot \alpha)) + d \cdot (1 - e \cdot \cos(f \cdot \pi/180 * \alpha))$$

wobei unverändert

$a = 1{,}2$
$c = 3$
$d = 0{,}4$
$e = 12$
$f = 5$

aber b = 4 gewählt ist anstatt zuvor 16. Dies zeigt deutlich, dass eine Reduktion von b die Schärfe der Rücksprünge reduziert.

Dem Fachmann sind natürlich auch weitere kleinere Variationen möglich ohne den Schutzbereich der Erfindung zu verlassen. Insbesondere könnte h auch noch größer gewählt werden, um die Vorsprünge platter zu machen (wobei ein Überschreiten der 0,5 mittig im Vorsprung eine Delle entstehen ließe) oder auch etwas kleiner, was zu gotikartigen Spitzbögen führt und zweckmäßig sein kann, wenn sich die Initialspaltung als weniger problematisch erweist im Vergleich zum Übergang in das Weiterspalten. Mit i = 0,2 statt 1 ließen sich noch weitaus komplexere Scharen bilden als die gezeigten drei im vorherigen Beispiel.

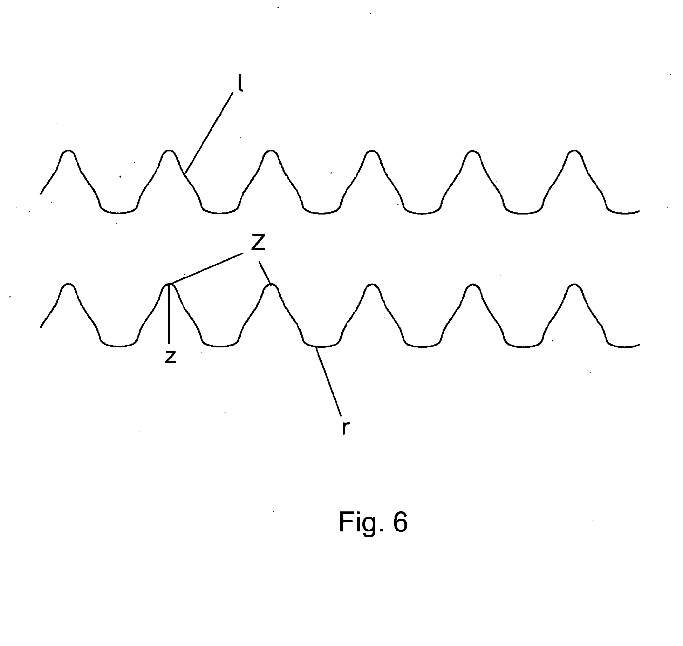

**Figur 6** zeigt maßstäblich in einer Darstellung analog der Figur 1, welche Klebebandkanten sich aus der in Figur 5 gezeigten Kurve durch Stauchung der γ-Achse ergeben. Man erkennt deutlich an den äußersten Stellen z der Rücksprünge Z (Diese Begriffe beziehen sich immer auf die voreilende Kante, die - analog Figur 1- hier die rechte Kante r ist), dass hier nun eine sanftere Krümmung mit sanfterer Kerbwirkung gegenüber Zug in der Längsrichtung dieses spaltfähigen Klebebandes 1 vorliegt. Die gleichen Rücksprünge erscheinen an der anderen Kante 1 wie Vorsprünge.

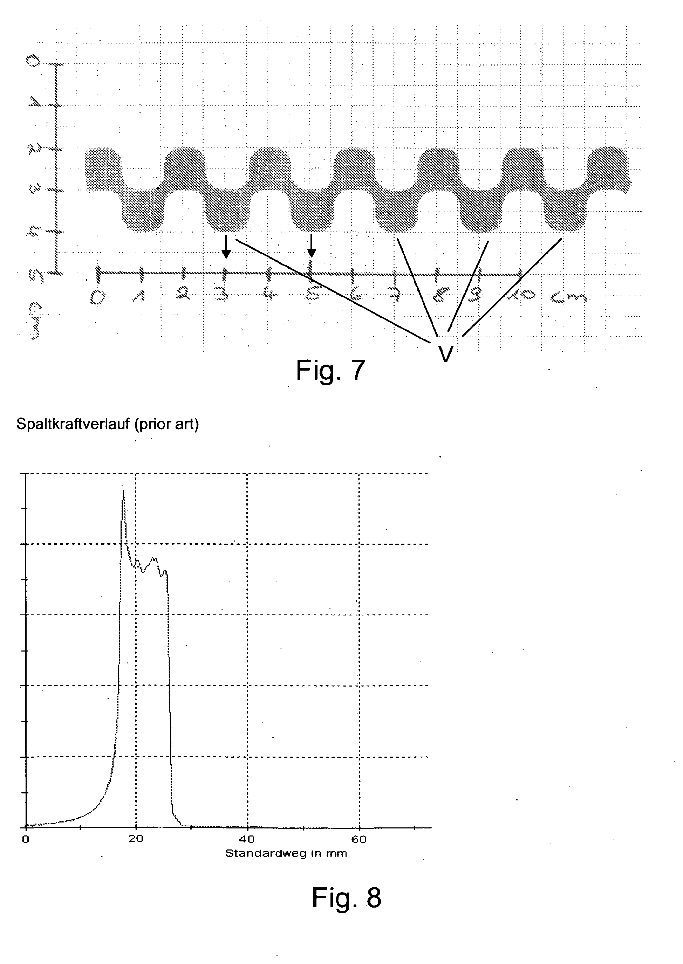

**Figur 7** zeigt im Maßstab 1:1 in einer Draufsicht ein weiteres Klebeband mit einem Träger aus einstückigem spaltfähigem Papier. Auch hier sind die beiden Kanten des spaltfähigen Klebebandes in erfindungsgemäßer Weise gewellt, nämlich solche Vorsprünge V aufweisend, die an ihren am weitesten vorspringenden Stellen v gerundet ausgeführt sind. Zur Erzeugung und mathematischen Beschreibung dieser Schnittkurven sind einfach in alternierender Weise Halbkreise aneinandergesetzt. Der jeweilige Halbkreisradius beträgt hier 5 mm und ist somit auch die Wellenamplitude, derweil die Wellenlänge das Vierfache davon beträgt, also 2 cm.

Ein solcher Wellenverlauf hat zunächst einmal den Vorteil, viel leichter von Hand für allererste Probemuster erzeugt werden zu können, um die Funktionstüchtigkeit der zunächst rein abstrakt entstandenen Erfindung prinzipiell nachweisen zu können.

Im Verhältnis zur Breite des Klebebandes von 1 cm ist die Wellenamplitude hier also sehr groß gewählt; dies einerseits deshalb, um den Nachweis mit einem besonders großen Effekt führen zu können (viel bringt viel) trotz stark vereinfachten Kurvenverlaufes und andererseits deshalb, weil die damit in Konflikt stehenden Belange der Applizierbarkeit zunächst auf die Unterseite eines Spliceklebebandes und dann mit diesem zusammen auf eine neue Rolle von Bahnmaterial für die ersten Laborversuche noch keine Rolle spielen müssen.

Unabhängig davon, welche Papierqualität zur Herstellung des so gewellten Trägers verwendet wurde - es wurden mehrere Sorten ausprobiert, darunter auch handelsübliches Kopierpapier der Marke "Plano Dynamic Office" des Herstellers Schneider und Söhne - , der Initialspaltwiderstand und damit das Maximum im Spaltkraftverlauf wurde auf etwa 40 % desjenigen Wertes abgesenkt, der sich bei geraden Kanten einstellt.

Ein Klebeband dieser Ausführung entspricht neben den Forderungen des Anspruches 1 auch denjenigen der kantenbeschreibenden Ansprüche 8 und 9 sowie vorzugsweise der weiteren Ansprüche 10 und 11. Dieser andere Kurvenverlauf weist aber trotz seiner (einmaligen) stetigen Differenzierbarkeit nur einen Wendepunkt pro Flanke auf, während die in den Figuren 1 bis 6 gezeigten Kantenverläufe drei Wendepunkte pro Flanke haben.

Um zu einem für die spätere Praxis möglichst realistischen Funktionstest zu kommen, wurde der gemäß Figur 7 gestaltete spaltfähige Klebestreifen zunächst mit einem 50 mm breiten Spliceklebeband verheiratet mit einem Versatz zwischen den voreilenden Kanten des Spliceklebebandes einerseits und des spaltfähigen Klebebandes andererseits von 2 mm, wie dies EP 1 022 245 näher beschreibt. Des weiteren wurde zum Vergleich mit dem vorbekannten Stand der Technik ein gleiches Spliceklebeband mit gleichem Versatz mit einem geradkantigen spaltfähigen Klebestreifen auf der Unterseite verheiratet mit ansonsten gleichen Materialien.

**Figur 8** zeigt in einem Diagramm den Spaltkraftverlauf - also die Spaltkraft über dem abgezogenen Weg - des vorgenannten Verbandes mit geraden Kanten am spaltbaren unteren Klebeband. Zu erkennen ist beim Verfolgen des Graphen über die vorgegebene Splicebandbreite von 50 mm zunächst ein steiler Anstieg ab etwa 14 mm mit einem absoluten Maximum bei 17 mm bei fast 5 Skalenteilungen der γ-Achse.

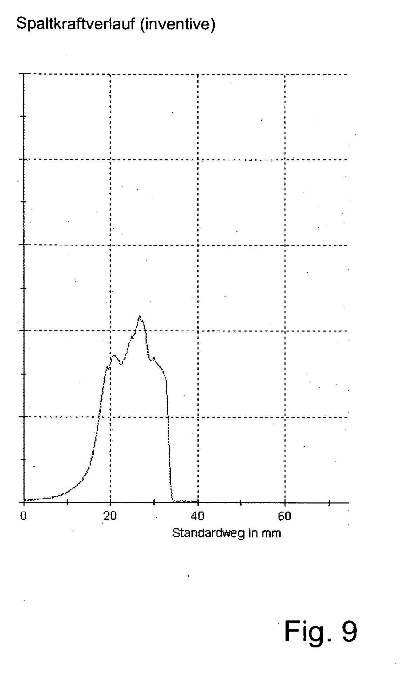

**Figur 9** zeigt in einem Diagramm analog Figur 8 den Spaltkraftverlauf für einen Papierstreifen mit erfindungsgemäß gewellter Kante, und zwar mit einer Kante gemäß Figur 7. Alle anderen Eigenschaften des Prüflings und der Versuchsbedingungen sind unverändert, sodass ein Vergleich mit der den Stand der Technik illustrierenden Figur 8 zulässig ist. (Der zufälligerweise beim Einkopieren entstandene andere Maßstab hat keine technische Bedeutung; eine Skalenteilung ist hier das selbe wie in Figur 8.)

Dass der Kraftschrieb in beiden Diagrammen auch nach den besagten 2 mm Kantenversatz eher sanft als abrupt ansteigt, liegt weitaus weniger am Verhalten des zu untersuchenden Spaltstreifens selber als vielmehr an den Elastizitäten in den Versuchsapparaten. Hierzu tragen auch die zu beiden Seiten des Prüflings angebrachten Papierbahnstücke bei, die - trotz des Nachteiles ihrer Elastizität - wegen des Vorteiles einer realistisch gleichmäßigen Krafteinleitung in den Prüfling über seine Gesamterstreckung sinnvoll sind. Für die physikalische Analyse tut man also gedanklich zweckmäßigerweise so, als ob der Nullpunkt der x-Achse an der Stelle dieses ersten relativen Kraftmaximums läge.

Der prior art Schrieb zeigt sehr ausgeprägt bei x = 17 mm ein erstes Maximum, welches nicht nur ein relatives, sondern ein absolutes ist. Seine Höhe liegt bei ca. 4,8 Skalenteilungen der γ-Achse.

Die γ-Achse ist in beiden Diagrammen nicht absolut bemaßt, zum einen, weil das ansonsten dort einzutragende Maß von der Abzugsgeschwindigkeit abhinge (für diesen Versuch waren 300 mm pro Minute gewählt) sowie der Papierqualität und der Breite der damit für einen Splice vorzubereitenden Rolle. Die Spaltfestigkeiten pro Breite des für das spaltfähige Klebeband als Träger eingesetzten Papiers kann je nach Verwendungszweck zwischen 10 und 100 cN pro cm. Im Diagramm nach Figur 9 erfolgt der Spaltungsbeginn bei x = 18 mm, ist aber dort nur noch schwach erkennbar, weil nur noch in einer Höhe von 1,6 Skalenteilen vorliegend. Man erkennt einen leichten Anstieg des Spaltkraftverlaufes in der Nähe von x = 22 mm, was dem gesteigerten Energieaufwand für das Weiterspalten zuzurechnen ist. An der Stelle x = 28 mm zeigt sich das absolute Maximum dieses Spaltkraftverlaufes in einer Höhe von 2,2 Skalenteilen. Damit liegt dieses absolute Maximum der untersuchten erfindungsgemäßen Ausführung bei weniger als der Hälfte der vorbekannten Ausführung mit geraden Kanten.

Höhe und Lage dieses Maximums scheinen in Zusammenhang zu stehen mit dem Umstand, dass nach 10 mm Spaltweg gerade sowohl der äußerste Punkt der Rücksprünge der voreilenden Kante wie auch zugeordnet an der nacheilenden Kante das Ende des Spaltstreifens zugeordnet ist.

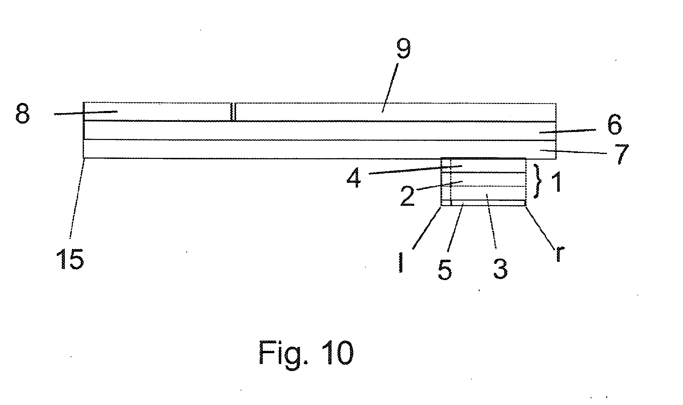

**Figur 10** zeigt in einer Stirnansicht ein erfindungsgemäßes Splice-Klebeband bestehend im wesentlichen aus einem Träger 7 und einer oberen Klebeschicht 6, welche zunächst mit zwei Linern 8 und 9 - in an sich bekannter Weise vorzugsweise aus silikonisiertem Papier bestehend - abgedeckt ist. Auf seiner Unterseite ist an dem Spliceklebeband ein erfindungsgemäßes, spaltfähiges Klebeband 1 mit wellenförmigen Kanten l und r (besser "*l* und *r*", was aber diesem Schreibsystem nur schwer zu entlocken ist) befestigt; diese Befestigung ist hier - wie es besonders einfach und voll funktionstüchtig ist - dadurch bewirkt, dass das spaltfähige Klebeband 1 nicht nur auf seiner Unterseite eine Schicht 3 von Selbstklebemasse aufweist sondern auch auf seiner Oberseite eine Schicht 4 von Selbstklebemasse. Aus Kostengründen ist es bevorzugt, wenn die Klebemassen der Schichten 3 und 4 übereinstimmen; die Klebemasse 6 auf der Oberseite des Spliceklebebandes ist hingegen vorzugsweise anders gewählt, nämlich auf einen sehr raschen Haftungsaufbau über der Zeit hin gezüchtet. In an sich bekannter Weise ist die Unterseite des spaltfähigen Klebebandes zudem mit einem weiteren Liner 5 abgedeckt.

Das offensichtlichste Merkmal der Erfindung, die Wellenförmigkeit des spaltbaren Klebebandes 1 mit seinem spaltbaren Papierträger 2, ist auch in der Stirnansicht erkennbar und zwar an der doppelt erscheinenden linken Kante. Besonders bevorzugt erfolgt - wie hier gezeigt - die Ablängung des Spliceklebebandes bei Applikation auf die vorzubereitende Rolle so, dass der Schnitt durch einen voreilenden Vorsprung verläuft, weil so die Gefahr eine Randfaltenwurfes minimiert ist. Darum sieht man hier an der rechten voreilenden Kante keine Verdoppelung.

Wie dem Fachmann an sich geläufig, wird das in Fig. 10 erläuterte Spliceklebeband in der Weise angewendet, dass zunächst von der vorzubereitenden neuen Rolle der Anfang der radial äußeren Wicklung 11 erhoben oder zurückgeschlagen wird, dann der Liner 5 von der Unterseite entfernt wird und dann das so klebebereit gemachte Spliceklebeband in die Nähe - im Zweifel einige cm zurückgesetzt - des Rollenendes zumindest im wesentlichen axial aufgeklebt wird. Vorzugsweise wird dabei das Klebeband exakt axial ausgerichtet, was einerseits Querschübe verhindert und andererseits jetzt durch die viel bessere Verteilung der Spaltungsenergie über der Bahnlänge aufgrund der Erfindung auch verkraftbar ist.

Danach wird der nacheilende Liner 8 des Spliceklebebandes entfernt, dadurch der nacheilende Teil der Klebefläche 6 freigelegt und dann der zunächst erhobene bzw. zurückgeschlagene Rollenanfang 11 auf die klebebereite Fläche aufgebracht. In der Regel wird danach etwas Papier überstehen über den vorderen Klebflächenrand (jedenfalls darf nicht die umgekehrte Situation eintreten), wobei dieser Klebflächenrand gerade da eintritt, wo ehemals die Trennfuge zwischen den beiden Linern 8 und 9 war. Der überstehende Papierrand wird nun zweckmäßigerweise in scharfem Knick zurückgefaltet und dann mit einem scharfen Messe, das in der Knickfalte geführt wird, abgetrennt. Danach wird nun auch der voreilende Liner 9 entfernt, sodass nun der voreilende Teil der Klebefläche 6 freiliegt.

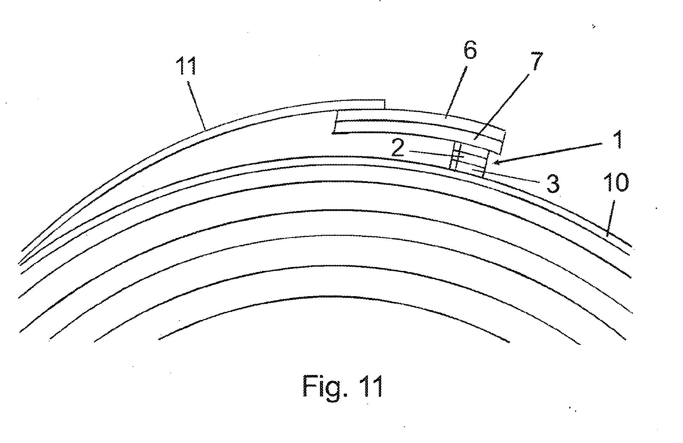

Genau diese Situation zeigt **Figur 11** auf einer Papierrolle 10. Diese Figur 11 ist eine - nicht maßstabsgerechte - Ansicht von der Seite auf die ausschnittweise zu sehende neue Papierrolle 10. Deren Anfang ist nun - erfindungsgemäß leicht öffenbar - verschlossen und damit vorbereitet zum Hochbeschleunigen der Rolle 10 auf eine solche Drehzahl, dass die Geschwindigkeit am Rollenumfang der Laufgeschwindigkeit der zur Neige gehenden Bahn entspricht.

So wie der der Bandspannung in der neu verlängerten Bahn aufnehmende (Haupt-)Träger 7 zweckmäßigerweise genau auf das zusammenzufügende Material abgestimmt wird und die eingesetzten Klebemassen auf die zur Verfügung stehende Zeit zum Klebkraftaufbau und die verwirklichte Klebeflächengröße wiederum wieder auf die Kohäsivität dieser Klebmasse abgestimmt wird, so muss auch das spaltfähige Klebeband 1, insbesondere dessen Initialspaltwiderstand möglichst genau auf das zu fügende Bahnmaterial abgestimmt werden. Desto empfindlicher das Material ist, desto kleiner muss der Initialspaltwiderstand gewählt werden. Die Leistung der Erfindung liegt im Wesentlichen darin, dem Fachmann neben einer zielgerichteten Entwicklung des Spaltpapieres, aus dem der Träger 2 des spaltfähigen Klebebandes 1 gefertigt wird, auch an der Kantenkontur ein Verbesserungspotential zu eröffnen. In ersten Versuchen hat sich dieses Potential so groß erwiesen, dass sogar wieder Papier von etwas höherem Initialspaltwiderstand verwendbar ist. Eine hohe Qualitätskonstanz lässt sich hiermit leichter erreichen und zudem könnten so noch höhere Fliehkräfte beim Hochbeschleunigen aufgenommen werden, was selbst bei so empfindlichem Material wie Hochglanz-Tiefdruckpapier höhere Maschinenlaufgeschwindigkeiten erlauben könnte. Wegen der offenbarten engen Zusammenwirkung des spaltfähigen Klebebandes mit den anderen Komponenten des Spliceklebebandes und der damit auszurüstenden neuen Rolle, erscheint es als gerechtfertigt, auch Schutz für ein solches Spliceklebeband und für eine damit zum Splice vorbereitete neue Rolle zu suchen, wie dies die Ansprüche 10 und 11 tun.

Zumal ein solcher Kantenverlauf auch von keinem anderen bahnförmigen Material vorbekannt zu sein scheint, erscheint auch das Werkzeug zum Schneiden von solch ungeraden Kanten an einem Klebeband als neu. Dieses Werkzeug verkörpert genauso die gefundenen geschwungenen Kurven wie die Kanten des spaltfähigen Klebebandes. Darum erscheint auch hierfür ein Schutz gerechtfertigt.

Abschließend noch ein Wort zu einigen Begriffen der nicht immer systematische Fachsprache:

"Spliceklebeband", der von den Fachleuten unglücklicherweise sowohl für das nur oben klebende Klebeband mit dem Träger 7 verwendet wird als auch für den nach der Hochzeit vorliegenden Verband dieses in der Regel zunächst selbstständig hergestellten Spliceklebebandes mit dem spaltfähigen Klebeband. Im jeweiligen Zusammenhange ist aber klar, was gerade gemeint ist. Insoweit vom Verband die Rede ist, wird der Träger 7 auch gerne als Hauptträger bezeichnet, weil der Verband ja auch noch über einen zweiten Träger verfügt, nämlich den spaltfreudigen.

Der Begriff "spaltfreudig" meint eine Spaltbarkeit oder auch Spaltfähigkeit.

Die folgende Bezugszeichenliste ist Bestandteil der Beschreibung:

**Bezugszeichenliste:**

1 spaltfähiges Klebeband

2 Träger von 1

3 untere Selbstklebeschicht von 1

4 obere Selbstklebeschicht von 1

5 Liner auf der Unterseite des spaltfähigen Klebebandes

6 oben angeordnete Klebeschicht des Spliceklebebandes

7 (Haupt-)Träger des Spliceklebebandes

8 nacheilender Liner des Spliceklebebandes, bevorzugt Silikonpapier

9- voreilender Liner des Spliceklebebandes, bevorzugt Silikonpapier

10 neue Rolle mit Bahnmaterial, z. B. Hochglanz-Tiefdruckpapier

11 äußere Wicklung der neuen Rolle

*l* linke Begrenzungskante von 1

*r* rechte Begrenzungskante von 1

ü Übergangsbereich

v am weitesten vorspringende Stelle von V; der Erfindung kommt es eben da auf eine Verrundung an zur Abstumpfung oder Abplattung der früher dort vorgesehenen Spitzen

w Wendepunkte auf den Flanken der gewellten Kanten *l* und *r* von 1

z am weitesten zurückspringende Stellen von Z, also zwischen je zwei Vorsprüngen V

V Vorsprünge an derjenigen - erfindungsgemäß ungeraden - Begrenzungskante des spaltbaren Klebebandes, die bei bestimmungsgemäßem Gebrauch während des Beschleunigens der neuen Rolle voreilen

$V_1$ Mit diesem Unterbegriff zu V sind Vorsprünge einer ersten Schar gemeint, die die gemeinsame Eigenschaft besitzen, gleich weit vorzuspringen, und zwar weiter als Vorsprünge $V_2$

$V_2$ Mit diesem Unterbegriff zu V sind Vorsprünge einer zweiten Schar gemeint, die die gemeinsame Eigenschaft besitzen, gleich weit vorzuspringen, und zwar weniger weit als Vorsprünge $V_1$

Z Rücksprünge an derjenigen Begrenzungskante des erfindungsgemäßen spaltbaren Klebebandes, die bei bestimmungsgemäßem Gebrauch während des Beschleunigens der neuen Rolle voreilen

**Patentansprüche**

1. Spaltfahiges Klebeband (1) mit einer linken (*l*) und einer rechten Begrenzungskante (r), wobei zumindest eine dieser beiden Kanten (*l, r*) ungerade ist, **dadurch gekennzeichnet dass** die ungerade Kante (*l*) Vorsprünge (V) aufweist, die an ihren am weitesten vorspringenden Stellen (v) gerundet ausgeführt sind.

2. Spaltfähiges Klebeband (1) nach Anspruch 1, **dadurch gekennzeichnet, dass** die ungerade Kante an ihren am weitesten zurückspringenden Stellen (z) ebenfalls gerundet ausgebildet sind, wobei aber an diesen Stellen die Krümmung wesentlich schärfer ist als an den vorspringenden Stellen.

3. Spaltfähiges Klebeband (1) nach Anspruch 1 oder 2, **dadurch gekennzeichnet, dass** die ungerade Kante jeweils zwischen einer weitesten vorspringenden Stelle (v) und der ihr nächstliegenden am weitesten zurückspringenden Stelle (z) stetig differenzierbar ist mit drei Wendepunkten.

4. Spaltfahiges Klebeband (1) nach Anspruch 1 oder 2, **dadurch gekennzeichnet, dass** die ungerade Kante jeweils zwischen einer weitesten vorspringenden Stelle (v) und der ihr nächstliegenden am weitesten zurückspringenden Stelle (z) stetig differenzierbar ist mit genau einem Wendepunkt.

5. Spaltfähiges Klebeband (1) nach Anspruch 4, **dadurch gekennzeichnet, dass** die ungerade Kante zusammengesetzt ist aus einer alternierenden Abfolge von Halbkreisen.

6. Spaltfähiges Klebeband (1) nach zumindest einem der vorangehenden Ansprüche, **dadurch gekennzeichnet, dass** das Negativ eines jeden Rücksprunges (Z) enger ausgebildet ist als das Positiv eines benachbarten Vorsprunges (V).

7. Spaltfähiges Klebeband (1) nach zumindest einem der vorangehenden Ansprüche, **dadurch gekennzeichnet, dass** die ungerade Kante zwei oder mehr Scharen ($V_1$, $V_2$) von Vorsprüngen (V) aufweist, die unterschiedlich weit vorspringen nach einem regelmäßigen Muster.

8. Spaltfähiges Klebeband (1) nach zumindest einem der vorangehenden Ansprüche, **dadurch gekennzeichnet, dass** beide Kanten des Klebebandes ungerade sind mit der gleichen Periodenlänge.

9. Spaltfähiges Klebeband nach Anspruch 8, **dadurch gekennzeichnet, dass** seine vor- und seine nacheilende Kante parallel zueinander verlaufen, sodass die Klebebandbreite trotz der Nichtgeradlinigkeit der beiden Klebebandkanten überall gleich ist.

10. Spaltfähiges Klebeband (1) nach einem der vorangehenden Ansprüche, **dadurch gekennzeichnet, dass** es in an sich bekannter Weise einen einstückig aus Papier hergestellten Träger (2) aufweist.

11. Spaltfähiges Klebeband (1) nach einem der vorangehenden Ansprüche, **dadurch gekennzeichnet, dass** es in an sich bekannter Weise auf zumindest einer seiner Seiten eine Selbstklebemasse aufweist.

12. Spliceklebeband, welches integriert enthält einen Rollenverschluss, **dadurch gekennzeichnet, dass** der Rollenverschluss aus einem spaltfähigen Klebeband nach zumindest einem der vorstehenden Ansprüche besteht.

13. Papier- oder Folienrolle, die dadurch zum Ersatze einer zur Neige gehenden anderen Papier- bzw. Folienrolle vorbereitet ist, **dadurch gekennzeichnet, dass** sie mit einem Splice-Klebeband nach Anspruch 12 beklebt wurde.

14. Verwendung eines Werkzeugs zum Schneiden oder Stanzen eines spaltfähigen Klebebands nach einem der Ansprüche 1 bis 11, **dadurch gekennzeichnet, dass** das Werkzeug eine ungerade Schneld-bzw. Stanzkante aufweist mit Vorsprüngen und Rücksprüngen, wobei zumindest die Rücksprünge - die am Schneid- bzw. Stanzgut komplementäre Vorsprünge erzeugen - gerundet sind.

**15.** Verwendung nach Anspruch 14, **dadurch gekennzeichnet, dass** das Werkzeug komplementär zumindest ein kennzeichnendes Merkmal der Ansprüche 2 bis 9 beinhaltet.

**Claims**

**1.** Splittable adhesive tape (1) having a left (*l*) and a right boundary edge (*r*), at least one of these two edges (*l, r*) being nonlinear, **characterized in that** the nonlinear edge (*l*) has projections (V) which at their furthest-projecting points (v) are rounded.

**2.** Splittable adhesive tape (1) according to Claim 1, **characterized in that** the nonlinear edge at its furthest-recessed points (z) are likewise of rounded design, but at these points the curvature is substantially sharper than at the projecting points.

**3.** Splittable adhesive tape (1) according to Claim 1 or 2, **characterized in that** in each case between a widest projecting point (v) and its closest furthest-recessed point (z) the nonlinear edge is continuously differentiable, with three inflection points.

**4.** Splittable adhesive tape (1) according to Claim 1 or 2, **characterized in that** in each case between a widest projecting point (v) and its closest furthest-recessed point (z) the nonlinear edge is continuously differentiable, with exactly one inflection point.

**5.** Splittable adhesive tape (1) according to Claim 4, **characterized in that** the nonlinear edge is composed of an alternating sequence of semicircles.

**6.** Splittable adhesive tape (1) according to at least one of the preceding claims, **characterized in that** the negative of each recess (Z) is of narrower design than the positive of an adjacent projection (V).

**7.** Splittable adhesive tape (1) according to at least one of the preceding claims, **characterized in that** the nonlinear edge has two or more families ($V_1$, $V_2$) of projections (V) which project to different extents in accordance with a regular pattern.

**8.** Splittable adhesive tape (1) according to at least one of the preceding claims, **characterized in that** both edges of the adhesive tape are nonlinear, with the same period length.

**9.** Splittable adhesive tape according to Claim 8, **characterized in that** its leading edge and its trailing edge extend parallel to one another, so that, in spite of the nonlinearity of the two adhesive tape edges, the adhesive tape width is the same everywhere.

**10.** Splittable adhesive tape (1) according to any one of the preceding claims, **characterized in that**, in a manner known per se, it has a carrier (2) produced in a single piece from paper.

**11.** Splittable adhesive tape (1) according to any one of the preceding claims, **characterized in that**, in a manner known per se, it has a self-adhesive composition on at least one of its sides.

**12.** Adhesive splicing tape comprising an integrated roll fastener,
**characterized in that** the roll fastener is composed of a splittable adhesive tape according to at least one of the above claims.

**13.** Roll of paper or roll of film, made thereby ready for replacement of another, expiring roll of paper or roll of film, **characterized in that** an adhesive splicing tape according to Claim 12 has been stuck to it.

**14.** Use of a tool for cutting or punching a splittable adhesive tape according to any one of Claims 1 to 11, **characterized in that** the tool has a nonlinear cutting or punching edge with projections and recesses, at least the recesses - which produce complementary projections on the cut or punched material - being rounded.

**15.** Use according to Claim 14, **characterized in that** the tool complementarily comprises at least one characterizing feature of Claims 2 to 9.

**Revendications**

**1.** Bande adhésive (1) pouvant être scindée, présentant un bord de délimitation gauche (1) et un bord de délimitation droit (r), au moins l'un de ces bords (1, r) n'étant pas linéaire, **caractérisée en ce que** le bord non linéaire (1) présente des parties proéminentes (V) présentant une réalisation arrondie en leurs sites les plus proéminents (v).

**2.** Bande adhésive (1) pouvant être scindée selon la revendication 1, **caractérisée en ce que** les bords non linéaires, en leurs sites les plus en recul (z) présentent également une réalisation arrondie, mais la courbure étant sensiblement plus prononcée en ces sites qu'au niveau des sites proéminents.

**3.** Bande adhésive (1) pouvant être scindée selon la revendication 1 ou 2, **caractérisée en ce que** le bord non linéaire est toujours différenciable, avec trois points d'inflexion, à chaque fois entre un site le plus proéminent (v) et le site le plus proche le plus en recul (z).

**4.** Bande adhésive (1) pouvant être scindée selon la revendication 1 ou 2, **caractérisée en ce que** le bord non linéaire est toujours différenciable, avec exactement un point d'inflexion, à chaque fois entre un site le plus proéminent (v) et le site le plus proche le plus en recul (z).

**5.** Bande adhésive (1) selon la revendication 4 pouvant être scindée, **caractérisée en ce que** le bord non linéaire est composé d'une succession alternante de demi-cercles.

**6.** Bande adhésive (1) pouvant être scindée selon au moins l'une quelconque des revendications précédentes, **caractérisée en ce que** le négatif d'une partie en recul (Z) présente une réalisation plus étroite que le positif d'une partie proéminente adjacente (V).

**7.** Bande adhésive (1) pouvant être scindée selon au moins l'une quelconque des revendications précédentes, **caractérisée en ce que** le bord non linéaire présente deux bandes ou plus ($V_1$, $V_2$) de parties proéminentes (V), qui s'avancent différemment, selon un modèle régulier.

**8.** Bande adhésive (1) pouvant être scindée selon au moins l'une quelconque des revendications précédentes, **caractérisée en ce que** les deux faces de la bande adhésive sont non linéaires, en présentant la même longueur de période.

**9.** Bande adhésive pouvant être scindée selon la revendication 8, **caractérisée en ce que** ses bords de guide et de traîne s'étendent parallèlement l'un à l'autre, de manière telle que la largeur de la bande adhésive est partout la même, malgré la non-linéarité des deux faces de bande adhésive.

**10.** Bande adhésive (1) pouvant être scindée selon l'une quelconque des revendications précédentes, **caractérisée en ce qu'**elle présente, de manière connue en soi, un support (2) en un morceau en papier.

**11.** Bande adhésive (1) pouvant être scindée selon l'une quelconque des revendications précédentes, **caractérisée en ce qu'**elle présente, de manière connue en soi, sur au moins une de ses faces une masse autoadhésive.

**12.** Bande adhésive scindable contenant un arrêt de rouleau intégré, **caractérisée en ce que** l'arrêt de rouleau est constitué par une bande adhésive pouvant être scindée selon au moins l'une quelconque des revendications précédentes.

**13.** Rouleau de papier ou de feuille qui est préparé pour le remplacement d'un autre rouleau de papier ou de feuille qui tire à sa fin, **caractérisé en ce qu'**il a été encollé par une bande adhésive scindable selon la revendication 12.

**14.** Utilisation d'un outil pour la découpe ou l'estampage d'une bande adhésive pouvant être scindée selon l'une quelconque des revendications 1 à 11, **caractérisée en ce que** l'outil présente un bord de coupe ou, selon le cas, d'estampage non linéaire, doté de parties proéminentes et en recul, au moins les parties en recul - qui génèrent des parties proéminentes complémentaires sur le produit découpé ou estampé - étant arrondies.

15. Utilisation selon la revendication 14, **caractérisée en ce que** l'outil comporte en complément au moins une particularité caractéristique des revendications 2 à 9.

Fig. 1

Fig. 2

Fig. 3

Fig. 4

Fig. 5

l

Z

z

r

Fig. 6

## Fig. 7

Spaltkraftverlauf (prior art)

Standardweg in mm

## Fig. 8

24

Spaltkraftverlauf (inventive)

Standardweg in mm

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3006568 A
- WO 9108159 A
- DE 19544010 A1
- WO 9529115 A
- DE 19628317 A1
- DE 19632689 A1
- DE 19902179 A1
- WO 9946196 A

- WO 20020056784 A
- CA 2039631
- DE 4033900 A1
- DE 4033900
- DE 3834334 A1
- DE 4010704
- DE 19628317
- EP 1022245 A